**Europäisches Patentamt**

**European Patent Office**

**Office européen des brevets**

(11) Veröffentlichungsnummer: **0 188 686**
**B1**

(12) **EUROPÄISCHE PATENTSCHRIFT**

(45) Veröffentlichungstag der Patentschrift:
27.09.89

(21) Anmeldenummer: 85114417.0

(22) Anmeldetag: 13.11.85

(51) Int. Cl.⁴: **B 60 T 13/68**

(54) Einrichtung zur stetigen Steuerung eines normalerweise für unstetige Betriebsweise ausgebildeten Magnetventiles.

(30) Priorität: 24.01.85 DE 3502276

(43) Veröffentlichungstag der Anmeldung:
30.07.86 Patentblatt 86/31

(45) Bekanntmachung des Hinweises auf die Patenterteilung:
27.09.89 Patentblatt 89/39

(84) Benannte Vertragsstaaten:
DE FR GB IT NL SE

(56) Entgegenhaltungen:
EP-A- 0 075 657
DE-A- 2 902 337
DE-A- 3 102 928

(73) Patentinhaber: WABCO Westinghouse
Fahrzeugbremsen GmbH, Am Lindener
Hafen 21 Postfach 91 12 80, D-3000 Hannover 91 (DE)

(72) Erfinder: Rothen, Johann, Dipl.-Ing.,
Otto-Lilienthal-Strasse 7, D-3203 Sarstedt (DE)

(74) Vertreter: Schrödter, Manfred, WABCO Westinghouse
Fahrzeugbremsen GmbH Am Lindener
Hafen 21 Postfach 91 12 80, D-3000 Hannover 91 (DE)

## Beschreibung

Die Erfindung betrifft eine Einrichtung gemäss Oberbegriff des Anspruchs 1.

Bisher weitestgehend eingesetzte Bremsdruckregler verwenden elektrisch ansteuerbare Einlass- und Auslass-Magnetventile, die zur Einstellung des gewünschten Druckes durch Stellsignale jedesmal voll geöffnet und voll geschlossen werden. Hierdurch leidet die Genauigkeit der Regelung, bei Druckluftbremsanlagen ist der Luftverbrauch hoch, und die Lebensdauer der Magnetventile ist wegen der hohen Schalthäufigkeit gering.

Zur Vermeidung des vollen Öffnungs- und Schliessbetriebs der Magnetventile ist durch die DE-OS 29 02 337 ein Bremsdruckregler für pneumatische Bremsen von Fahrzeugen bekannt, bei dem eine Modulation der Impulsbreite der Steuersignale für die Magnetventile vorgesehen ist, indem einem Druck- Sollwert-Signal, das mit einem gemessenen Druck-Istwert-Signal verglichen werden soll, eine Wechselspannung überlagert wird, die mit dem Istwert-Signal verglichen wird. Hierdurch wird eine allmähliche Reduzierung des Tastverhältnisses auf 0,5 bei Regelabweichung 0 erreicht. Nachteilig ist, dass bei kleinen Frequenzen nicht verhindert werden kann, dass die Magnetventile praktisch voll betätigt werden. Eine grosse Regelabweichung und geringe Standzeit der Magnete sind die Folge. Bei grosser Frequenz der Wechselspannungssignale werden die Magnetventile bei kleinen Regelabweichungen nur sehr wenig geöffnet, und der Feinabgleich erfordert viele Pulsspiele. Die Steuerzeit ist nur grob steuerbar und ungenau. Das Ventil müsste erst vollkommen geschlossen sein, damit über eine genau bemessene Steuerzeit das Magnetventil auch feinfühlig in kleinen Schritten zu öffnen ist. Nachteilig ist ferner die Abhängigkeit von Einflüssen, wie Spulentemperatur, Spannung, Fertigungstoleranzen usw.

Durch den Prospekt «Proportional-Druckregelventile NG 4» der Firma Herion-Werke KG ist ein Proportional-Druckregelventil bekannt, bei dem der Sekundärdruck durch Änderung der Magnetkraft, die eine Kolbenauslenkung bewirkt, eingestellt wird. Das Mass für die Kolbenauslenkung wird durch einen elektrischen Sollwert als Spannungssignal vorgegeben. Dieses Signal wird auf die Eingangsseite eines Verstärkers gegeben. Auf der Ausgangsseite des Verstärkers erhält man proportional zur Eingangsspannung den Ausgangsstrom. Dieser Strom, auf den Magnet geleitet, ergibt ein der Magnetkraft proportionales pneumatisches Ausgangssignal. Für die Bereitstellung grosser Stückzahlen ist dieses bekannte Druckregelventil in der Fertigung zu teuer wegen der erforderlichen genauen Feinabgleiche. Dieses bekannte Ventil arbeitet ausserdem zu ungenau, da ein Drucksensor nicht vorgesehen ist. Es besteht zudem eine grosse Abhängigkeit von äusseren Einflüssen.

Die Aufgabe der vorliegenden Erfindung besteht darin, eine Einrichtung der eingangs ge-nannten Art so auszubilden, dass die Druckregelung über das unstetige Magnetventil genauer und schneller und unabhängig von äusseren Einflüssen durchführbar ist.

Diese Aufgabe wird durch die Ausbildung gemäss Kennzeichen des Anspruchs 1 gelöst.

Mit der erfindungsgemässen Aufgabenlösung ist eine sehr schnelle und genaue Druckregelung preiswerter unstetiger Magnetventile möglich. Eine Übersteuerung ist ausgeschlossen. Es ist nicht notwendig, Einflüsse, wie Temperaturänderungen, Spannungsänderungen usw., zu erfassen und zu berücksichtigen. Fertigungstoleranzen wirken sich nicht aus. Die erfindungsgemässe Aufgabenlösung kompensiert solche Einflüsse automatisch. Ein besonderer Vorteil besteht darin, dass die Lebensdauer der Magnetventile wesentlich erhöht wird, weil durch die erfindungsgemässe Lösung ein unstetiges Magnetventil praktisch stetig arbeitend gemacht wird. Die Pulsbreite der Steuersignale wird der jeweiligen Regelabweichung angepasst. Die Zunahme des Istwert-Signales erfolgt begrenzt in einem sehr engen Bereich. Es erfolgt eine weitestgehende Schonung des Ventilsitzes, da sich im Pulsbetrieb der Anker des Magnetventiles nur wenig bewegt, d.h. wenig öffnet. Es sei darauf hingewiesen, dass die Ankerbewegung aus der Schliessstellung und nicht aus der Offenstellung heraus erfolgt.

Vorteilhafte und zweckmässige Weiterbildungen der erfindungsgemässen Aufgabenlösung sind in den Unteransprüchen gekennzeichnet.

Die Erfindung soll nachfolgend anhand der beigefügten Zeichnung näher erläutert werden.
Es zeigt

Fig. 1 ein schematisches Blockschaltbild einer pneumatischen Bremsdruckregeleinrichtung mit einer erfindungsgemässen Einrichtung zur Steuerung eines Magnetventiles,

Fig. 2 und 3 schematische Diagramme der von der erfindungsgemässen Einrichtung erzeugten Steuersignale «Öffnen» und «Schliessen» für ein elektrisch betätigtes Einlassmagnetventil.

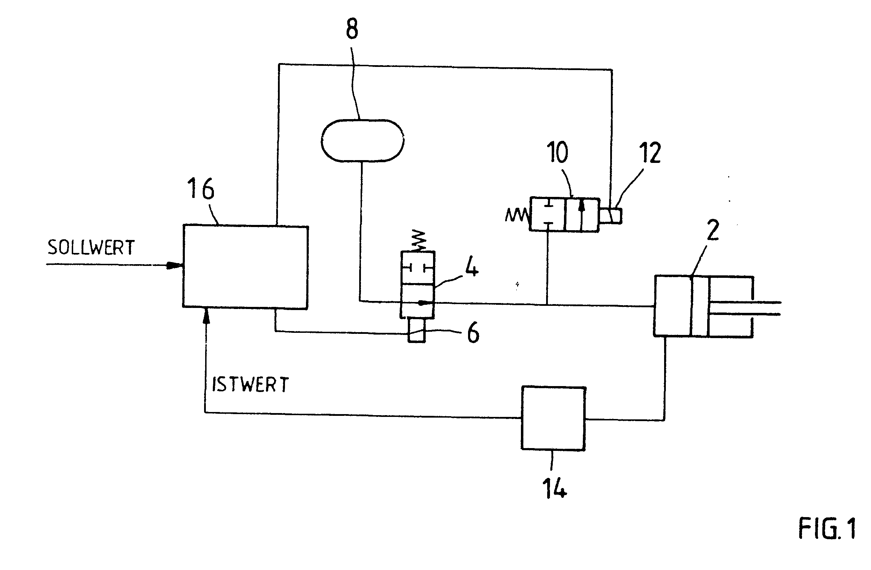

Eine in der Fig. 1 gezeigte Bremsdruckregeleinrichtung zeigt eine druckmittelbetätigte Bremse 2, deren Druck geregelt werden soll und die über ein Einlassventil 4 mit zugehöriger Magnetspule 6 mit einem Druckvorrat 8 und über ein Auslassventil 10 mit zugehöriger Magnetspule 12 mit einer Drucksenke (nicht dargestellt) verbunden ist. Der in der Bremse vorhandene Bremsdruck wird mit einem Druckgeber 14 gemessen, dessen dem gemessenen Druck proportionales Istwert-Signal mit einem Sollwert-Signal in einer Einrichtung 16 zur Steuerung der Magnetventile verglichen wird, die von der Abweichung vom Sollwert-Signal abhängige Steuersignale zur Ansteuerung der Magnetspulen des Einlass- und Auslassventiles erzeugt.

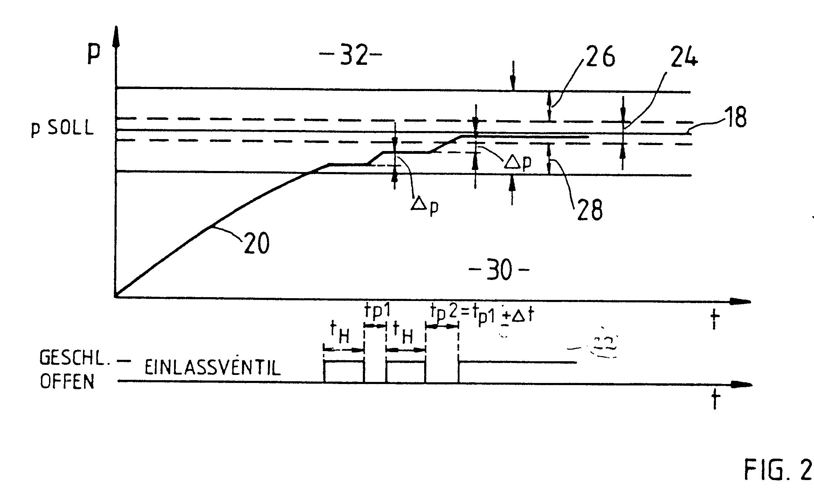

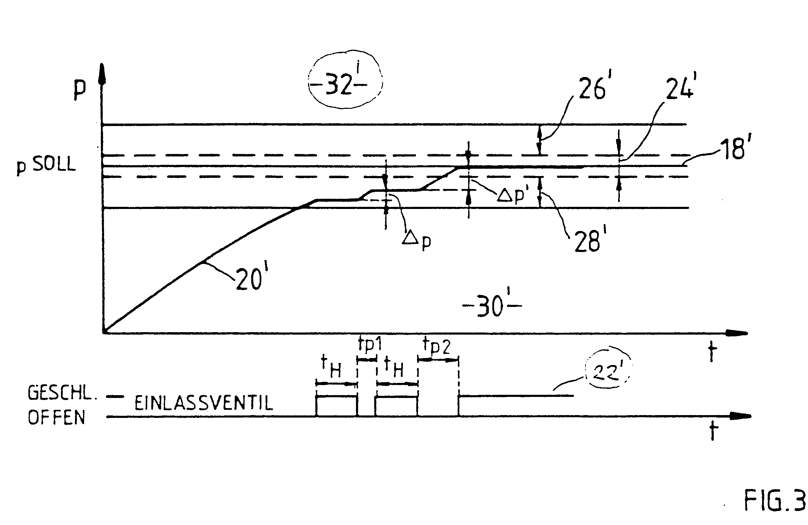

Die Arbeitsweise der erfindungsgemässen Einrichtung soll nachfolgend unter Bezug auf die Fig. 2 und 3 beschrieben werden.

In den Fig. 2 und 3 ist der zeitliche Druckverlauf in Abhängigkeit von den Magnetventil-Steuersignalen dargestellt. Mit dem Bezugszeichen 18, 18' ist der Druck-Sollwert, mit 20, 20' der Druck-Istwert, mit 22, 22' die Steuersignale für das Einlassventil, mit 24, 24' ein Druck-Haltebereich, mit 26, 28 und 26', 28' beiderseits des Haltebereichs liegende, hier sogenannte Lernbereiche, mit 30, 30' Bereiche, in denen das Einlassventil voll geöffnet ist, und mit 32, 32' Bereiche, in denen das Auslassventil voll geöffnet ist, bezeichnet.

Befindet sich der vom Druckgeber 14 gemessene Istdruck noch unterhalb des Lernbereiches 26 bzw. 26' (also unterhalb des Druckbereiches $p_{Soll}-p_{Lernbereich}$), ist das Einlassventil voll geöffnet. Erreicht der Istdruck die Grenze des Lernbereiches, so wird das Einlassventil durch die Einrichtung 16 für eine Zeit $t_H$ geschlossen. Nach Ablauf dieser Zeit $t_H$ erzeugt die Einrichtung 16 einen Steuerimpuls zur Druckeinsteuerung über eine der Impulsbreite entsprechende Pulszeit $t_p$, wonach der Steuerimpuls wieder abfällt und das Einlassventil wieder schliesst.

Der Anfangswert $t_{p1}$ der Pulszeit ist so bemessen, dass unter Berücksichtigung der ungünstigsten Bedingungen bezüglich Temperatur, Spannung, Druck usw., die bekannt sind, die Druckerhöhung $\triangle p$ nur so gross wird, dass der Haltebereich 24 erreicht wird. In der Regel liegt der Ist-Druckwert nach Ablauf der Pulszeit $t_{p1}$ noch im Lernbereich. Lag die Druckerhöhung $\triangle p$ unterhalb einer vorgegebenen unteren Differenzdruckschwelle $\triangle p_1$ (z.B. 50 millibar) erfolgt eine erneute pulsmässige Ansteuerung des Einlassventiles über die Einrichtung 16 zur Erhöhung des Druckes, und zwar mit einer um eine vorgegebene Zeit $\triangle t$ (z.B. 0,5 millisec) erhöhten Pulszeit $t_{p2}$ = $t_{p1} + \triangle t$. Wird mit dieser Pulszeit die Schwelle $\triangle p_1$ überschritten, wird mit dieser Pulszeit $t_{p2}$ weiterhin gepulst, bis der Haltebereich 26 erreicht ist, in dem das Einlassventil geschlossen wird.

Wird im Lernbereich 26 während der Pulszeit $t_{p1}$ eine obere Differenzdruckschwelle $\triangle p_2$ (z.B. 100 millibar) überschritten, so wird für die folgende Einsteuerphase die Pulszeit um $\triangle t$ gemindert, bis diese Schwelle $\triangle p_2$ wieder unterschritten wird.

Solange sich der Ist-Druck im Lernbereich befindet, wird die «erlernte» Pulszeit $t_{p2}$ als neuer Anfangswert genommen und gegebenenfalls in Abhängigkeit von den gemessenen Druckdifferenzen adaptiv, wie oben beschrieben, so lange um $\triangle t$ korrigiert bzw. erhöht, bis der Druckhaltebereich 24 erreicht ist.

In der Fig. 3 ist eine modifizierte Arbeitsweise der Einrichtung 16 dargestellt. Der Druckgeber 14 ist bei dieser Ausführungsform so steuerbar, dass er die Druckerhöhung $\triangle p$ in der bekannten Pulszeit $t_{p1}$ misst. Ausserdem wird die Differenz $\triangle p'$ bis zum Druck-Sollwert ermittelt. Die neue Pulszeit $t_{p2}$ wird dann errechnet aus

$$t_{p2} = (t_{p1} - t_{Tot}) \cdot \frac{\triangle P'}{\triangle P} - t_{Tot}$$

worin $t_{Tot}$ die Tot-Zeit ist. Die Pulsbreite des nächsten Steuerimpulses wird entsprechend dieser ermittelten neuen Pulszeit bemessen, so der Haltebereich erreicht wird.

Der Vorteil dieser Arbeitsweise gegenüber der Arbeitsweise gemäss Fig. 2 besteht darin, dass weniger Pulsspiele zur Erreichung des Haltebereiches notwendig sind, insbesondere im oberen Druckbereich.

**Patentansprüche**

1. Einrichtung zur kontinuierlichen Steuerung eines normalerweise für unstetige Betriebsweise ausgebildeten, elektrisch betätigten Magnetventils (4, 10) zur Regelung eines Druckes, mit einem Druckgeber (14), der ein dem zu regelnden Druck proportionales Istwert-Signal erzeugt, mit einem Druck-Sollwert-Geber, der ein Sollwert-Signal erzeugt, und mit einer Einrichtung (16) zur Erzeugung von impulsförmigen Steuersignalen mit veränderlichem Tastverhältnis innerhalb eines bestimmten Druckbereichs für das Magnetventil (4, 10) in Abhängigkeit von der Differenz zwischen Istwert und Sollwert-Signal, wobei die Einrichtung (16) zur Erzeugung der Steuersignale in Abhängigkeit vom gemessenen Druck-Istwert-Signal des Druckgebers (14) oder einem davon abhängigen Wert das Magnetventil (4, 10) so ansteuert, dass der Anker des Magnetventils (4, 10) pulsweise nur geringfügig aus einer Ventil-Schliessstellung heraus bewegt wird, dadurch gekennzeichnet, dass die Einrichtung (16) einen Rechner enthält, welcher schrittweise innerhalb eines vorbestimmten ersten Druckbereiches (26, 28; 26', 28') (Lernbereich) die Pulsbreite $t_p$ (Pulszeit) der elektrischen Steuerimpulse in Abhängigkeit von der während der Pulszeit erfolgten Druckänderung $\triangle p$ ändert.

2. Einrichtung nach Anspruch 2, dadurch gekennzeichnet, dass die gemessene Druckänderung mit unteren und oberen Differenzdruck-Schwellwerten $\triangle p_1$, $\triangle p_2$ verglichen wird und dass die Pulsbreite bei Unterschreitung des unteren und bei Überschreitung des oberen Schwellwertes um einen bestimmten Wert $\triangle t$ geändert wird.

3. Einrichtung nach Anspruch 2 oder 3, dadurch gekennzeichnet, dass die Pulsbreite bei Unterschreitung der unteren Schwelle erhöht und bei Überschreitung der oberen Schwelle verringert wird.

4. Einrichtung nach einem der Ansprüche 1 bis 4, dadurch gekennzeichnet, dass die Steuerimpulse bis zum Erreichen eines zweiten Druckbereiches (24) erzeugt werden, in welchem der erreichte Druck durch Schliessen des Magnetventiles gehalten wird.

5. Einrichtung nach Anspurch 1 oder 2, dadurch gekennzeichnet, dass die Pulsbreite $t_p$ (Pulszeit) des Steuerimpulses in Abhängigkeit von der in der Pulszeit eines vorhergehenden Steuerimpulses gemessenen Druckänderung $\triangle p$ sowie von der Differenz $\triangle p'$ zwischen dem gemessenen Druck-Istwert und dem Druck-Sollwert geändert wird.

6. Einrichtung nach Anspruch 6, dadurch ge-

kennzeichnet, dass die Druckänderung $\triangle p$ in der Pulszeit des ersten Steuerimpulses gemessen wird.

## Revendications

1. Dispositif de commande continue d'une vanne magnétique (4, 10) actionnée électriquement, normalement conçue pour un mode de fonctionnement discontinu, pour réguler une pression, comportant un capteur de pression (14) qui génère un signal de valeur réelle proportionnel à la pression à régler, un capteur de valeur de consigne de pression qui génère un signal de valeur de consigne, et un dispositif (16) pour produire des signaux de commande impulsionnels à taux d'impulsion variable, à l'intérieur d'une plage de pression déterminée, pour commander la vanne magnétique (4, 10) en fonction de la différence entre signaux de valeur réelle et de valeur de consigne, le dispositif (16) pour produire les signaux de commande commandant la vanne magnétique (4, 10) en fonction du signal de valeur réelle mesuré généré par le capteur de pression (14), ou d'une valeur qui en dépend, de manière que l'armature mobile de la vanne magnétique (4, 10) ne soit déplacée impulsionnellement que légèrement hors d'une position de fermeture de vanne, caractérisé par le fait que le dispositif (16) contient un calculateur qui modifie pas-à-pas, à l'intérieur d'une première plage de pression prédéterminée (26, 28; 26', 28') (plage d'apprentissage), la largeur d'impulsion $t_p$ (temps d'impulsion) des impulsions électriques de commande, en fonction de la variation de pression $\triangle p$ produite pendant le temps d'impulsion.

2. Dispositif selon revendication 2, caractérisé par le fait que la variation de pression mesurée est comparée à des valeurs $\triangle p_1$, $\triangle p_2$ de seuil de différence de pression, inférieure et supérieure, et par le fait que la largeur d'impulsion est modifiée d'une certaine valeur $\triangle t$ dans le cas où la valeur de seuil n'est pas atteinte et dans le cas où la valeur de seuil supérieure est dépassée.

3. Dispositif selon revendication 2 ou 3, caractérisé par le fait que la largeur d'impulsion est augmentée dans le cas où le seuil inférieur n'est pas atteint et est diminuée en cas de dépassement du seuil supérieur.

4. Dispositif selon l'une des revendiations 1 à 4, caractérisé par le fait que les impulsions de commande sont produites jusqu'à ce qu'une deuxième plage de pression (24) soit atteinte, dans laquelle la pression atteinte est maintenue par fermeture de la vanne magnétique.

5. Dispositif selon revendication 1 ou 2, caractérisé par le fait que la largeur d'impulsion $t_p$ (temps d'impulsion) de l'impulsion de commande est modifiée en fonction de la variation de pression $\triangle p$ mesurée dans le temps d'impulsion d'une impulsion de commande précédente, ainsi qu'en fonction de la différence $\triangle p'$ entre la valeur réelle de pression mesurée et la valeur de consigne de pression.

6. Dispositif selon revendication 6, caractérisé par le fait que la variation de pression $\triangle p$ est mesurée dans le temps d'impulsion de la première impulsion de commande.

## Claims

1. Device for the continuous control of an electrically actuated selenoid valve (4,10), normally arranged for a discontinuous operating mode, for regulating a pressure, having a pressure transducer (14) which produces an actual value signal proportional to the pressure being regulated, having a desired pressure value transducer which produces a desired value signal, and having a device (16) for producing pulse-like control signals with variable duty cycle within a particular pressure range for the solenoid valve (4, 10) in response to the difference between actual value and desired value signal , the device (16) for producing the control signals in response to the measured actual pressure value signal of the pressure transducer (14) or to a value which is dependent thereon operates the solenoid valve (4, 10) in such a way that the armature of the solenoid valve (4, 10) is moved pulsewise only slightly out of a valve closed position, characterised in that the device (16) contains a computer which progressively within a predetermined first pressure range (26, 28; 26', 28') (learining range), alters the pulse width $t_p$ (pulse time) of the electrical control pulses in response to the pressure change $\triangle p$ which has taken place during the pulse time.

2. Device according to Claim 2, characterised in that the measured pressure change is compared with lower and upper differential pressure threshold values $\triangle p_1$, $\triangle p_2$ and that the pulse width, when the value drops below the lower threshold value and when it goes above the upper threshold value, is altered by a particular value $\triangle t$.

3. Device according to Claim 2 or 3, characterised in that the pulse width is increased when the value drops below the lower threshold and is reduced when it goes above the upper threshold.

4. Device according to one of Claims 1 to 4, characterised in that the control pulses are produced until a second pressure range (24) is reached in which the pressure reached is maintained by closing the solenoid valve.

5. Device according to Claim 1 or 2, characterised in that the pulse width $t_p$ (pulse time) of the control pulse is altered in response to the pressure change $\triangle p$ measured during the pulse time of a preceding control pulse and to the difference $\triangle p'$ between the measured actual pressure value and the desired pressure value.

6. Device according to Claim 6, characterised in that the pressure change $\triangle p$ during the pulse time of the first control pulse is measured.

FIG.1

SOLLWERT

ISTWERT

EP 0 188 686 B1

1/3

FIG. 2

EP 0 188 686 B1

2/3

FIG.3

EP 0 188 686 B1